# FASCICULE DE BREVET EUROPEEN

(11) **EP 1 153 464 B1**
(45) Date de publication et mention de la délivrance du brevet: **21.06.2006**
(21) Numéro de dépôt: 00903762.3
(22) Date de dépôt: 09.02.2000
(51) Int. Cl.: H02H 9/04

(54) **DISPOSITIF PARAFOUDRE POUR INSTALLATIONS ELECTRIQUES DE FORTE PUISSANCE**
ÜBERSPANNUNGSABLEITER FÜR ELEKTRISCHE STARKSTROMANLAGEN
LIGHTNING ARRESTOR DEVICE FOR HIGH POWER ELECTRIC INSTALLATIONS

(30) Priorité: 09.02.1999 FR 9901503
(43) Date de publication de la demande: 14.11.2001
(73) Titulaire: Girard, François Marie, F-21000 Dijon (FR)
(72) Inventeur: Girard, François Marie, F-21000 Dijon (FR)
(74) Mandataire: Puiroux, Guy
(86) Numéro de dépôt international: PCT/FR2000/000307
(87) Numéro de publication internationale: WO 2000/048285

(56) Documents cités:
- DE-A- 4 124 321
- US-A- 4 288 833

## Description

La présente invention concerne un dispositif parafoudre du type utilisé notamment pour assurer la protection des installations électriques de forte puissance.

On sait que pour assurer la protection de telles installations contre la foudre on fait appel à des dispositifs parafoudre qui sont branchés entre un fil du réseau et la terre, et qui comprennent des composants qui, en fonctionnement normal, se comportent comme des éléments neutres, mais qui en cas de surtensions violentes deviennent conducteurs, si bien qu'ils dérivent vers la terre le courant dû à la foudre, protégeant ainsi l'installation disposée en aval contre les effets destructeurs de la surtension.

Par mesure de sécurité on est contraint, de par la norme IEC 61643-1, d'associer au parafoudre un déconnecteur qui a pour rôle de couper le circuit dans le cas où le parafoudre se détruit. Ces déconnecteurs peuvent être essentiellement disposés suivant deux configurations.

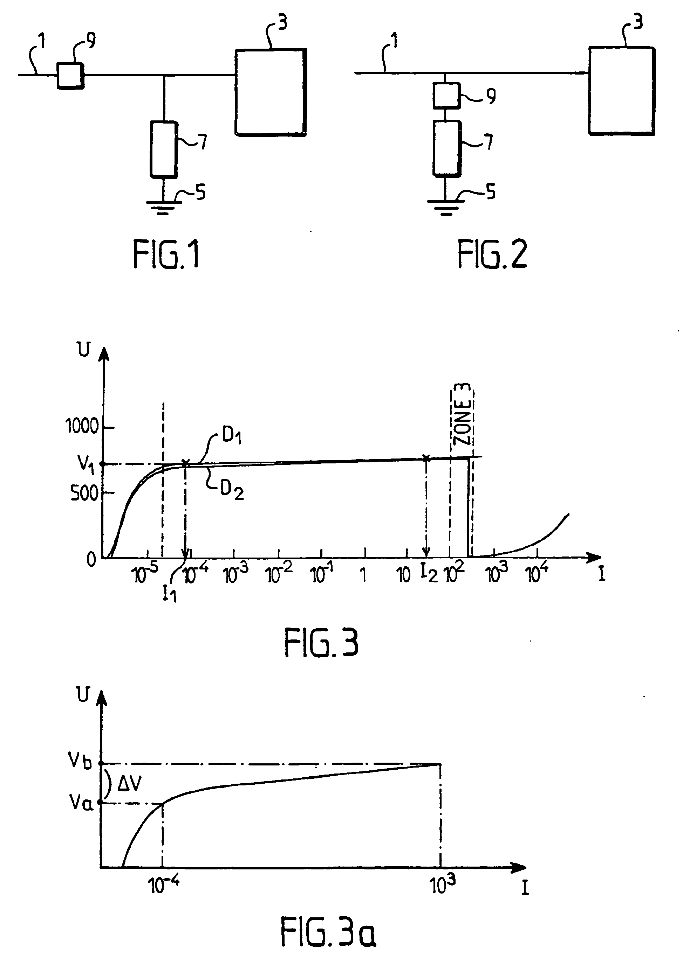

Dans une première configuration, le déconnecteur est disposé, ainsi que représenté sur la figure 1, sur la ligne elle-même. Dans ces conditions on comprend que sa déconnexion entraîne la coupure en alimentation électrique des installations qui se trouvent en aval.

Dans la seconde configuration, représentée sur la figure 2, le déconnecteur est disposé sur la branche de dérivation allant à la terre, si bien que sa déconnexion respecte bien une continuité de service puisque le courant peut continuer à circuler dans la branche principale, mais il n'assure plus une continuité de la protection puisqu'il interrompt la dérivation vers la terre.

On comprend qu'aucune de ces deux configurations n'est totalement satisfaisante, puisque après la destruction du parafoudre et de l'activation du déconnecteur qui lui est associé, la première a pour effet de paralyser l'installation et la seconde a pour effet de mettre celle-ci en péril.

On sait également qu'une autre qualité d'un parafoudre est sa capacité d'écouler les surtensions sans qu'aucune usure ne se manifeste. C'est pourquoi il apparaît intéressant de constituer un tel parafoudre à partir d'éléments particulièrement résistants à l'usure tels que les jonctions de semi-conducteurs de type Zener qui, par ailleurs, possèdent d'autres qualités par rapport aux autres dispositifs parafoudres de l'état antérieur de la technique tels que notamment les éclateurs et les varistances.

Le document DE-4124321-A décrit un dispositif de protection contre les surtensions comportant des composants à résistance variable en fonction de la tension, tels que des varistances, branchés respectivement en série avec des déconnecteurs, tels que des fusibles, dans au moins deux branches de circuit s'étendant en parallèle entre une ligne d'alimentation électrique devant être protégée contre les surtensions et la terre.

La présente invention a pour but de remédier aux inconvénients précités en proposant des moyens de protection contre les effets de la foudre qui assurent à la fois, après un coup de foudre, aussi bien la continuité de service à l'installation que sa protection contre un coup de foudre ultérieur, et ceci avec des composants de type Zener.

La présente invention a ainsi pour objet un dispositif parafoudre destiné à protéger une installation alimentée par une ligne électrique, formé d'au moins deux ensembles branchés en parallèle entre la ligne à protéger et la terre et comprenant chacun un déconnecteur monté en série avec au moins un composant à résistance variable en fonction de la tension, caractérisé en ce que le composant à résistance variable est une diode de type Zener, au moins un ensemble étant constitué d'au moins deux diodes de type Zener, disposées en parallèle.

Suivant l'invention les tensions de seuil des diodes de type Zener respectives desdits ensembles seront préférentiellement voisines.

Dans un mode de mise en oeuvre de l'invention l'un des ensembles comprend une diode de type Zener dont la tension de seuil est supérieure à celle des diodes Zener des autres ensembles.

Préférentiellement la tension de seuil dudit ensemble est supérieure à la tension de seuil de l'autre ensemble d'une valeur égale à sensiblement la différence de tension entre les valeurs à faible courant et à fort courant de l'autre ensemble.

Ainsi qu'il sera exposé ci-après une telle différentiation de ces diodes permet d'éviter que, dans des cas de caractéristiques très particulières de surtensions dues à la foudre, les deux diodes Zener deviennent simultanément conductrices et ne soient détruites, laissant alors l'installation démunie de protection.

On pourra également, afin de réaliser une sélection, donner à l'un des ensembles des liaisons courtes et à l'autre ensemble des liaisons longues.

Dans un mode de mise en oeuvre préférentiel de l'invention, au moins un des ensembles constitués d'au moins deux diodes Zener en parallèle possède des liaisons électriques entre ces diodes et l'installation qui sont des liaisons plus courtes que celles des autres ensembles.

On décrira ci-après, à titre d'exemple non limitatif, une forme d'exécution de la présente invention, en référence au dessin annexé sur lequel :
La figure 1 est une vue schématique d'un montage de protection suivant l'état antérieur de la technique dans une configuration excluant une continuité de service.
La figure 2 est une vue schématique d'un montage de protection suivant l'état antérieur de la technique dans une configuration excluant une continuité de protection.
La figure 3 est un graphique représentant la caractéristique d'une diode Zener de type utilisable suivant la présente invention, à savoir la variation de la tension en fonction de l'intensité de celle-ci.
La figure 3a est un graphique schématique de la caractéristique d'une diode Zener, destinée à mettre en évidence la différence de tension ΔV au borne de celle-ci, dans le cas de courants faibles et de courants forts.
La figure 4 est une vue schématique d'un exemple de montage de protection contre la foudre suivant l'invention.
La figure 5 est un graphique représentant la variation de la tension V en fonction de la variation de courant instantané di/dt respectivement pour deux diodes Zener en parallèle de tensions de seuil voisines, pour une diode Zener seule de même tension de seuil, et pour une diode Zener de tension de seuil légèrement supérieure.
Les figures 6 et 7 sont des vues schématiques de deux exemples de mise en oeuvre d'un montage de protection contre la foudre suivant l'invention.

On a représenté sur la figure 1 une ligne 1 d'alimentation électrique d'une installation 3 que l'on souhaite protéger contre les effets destructeurs de la foudre. Pour ce faire, on a disposé, suivant l'état antérieur de la technique entre la ligne 1 et la terre 5, un parafoudre 7, c'est-à-dire un dispositif qui, en fonctionnement normal, se comporte comme un élément neutre, c'est-à-dire qu'il ne conduit pas le courant, mais qui, dans le cas d'une surtension violente, devient conducteur. Dans une première configuration de protection représentée sur la figure 1, on dispose sur la ligne 1 en amont du parafoudre 7 un dispositif déconnecteur 9, c'est-à-dire un dispositif qui a pour effet d'ouvrir le circuit lorsqu'il est traversé par un courant important. Dans un tel mode de mise en oeuvre, lorsqu'une surtension trop violente due à la foudre intervient, faisant fondre le parafoudre, celui-ci se met en court-circuit et dérive le courant vers la terre 5, protégeant ainsi l'installation 3. Lors de cette action le déconnecteur 9 s'ouvre privant ainsi de toute alimentation électrique l'installation 3.

Dans la seconde configuration suivant l'état antérieur de la technique, représentée sur la figure 2, le déconnecteur 9 est placé sur la branche de dérivation en amont du parafoudre 7. Dans ces conditions, lorsque survient une forte surtension provoquée par la foudre, le parafoudre 7 passe à l'état de court-circuit, dérivant ainsi la surtension vers la terre 5, puis le déconnecteur 9 ouvre le circuit. Dans ces conditions, si l'installation 3 reste alimentée en courant après l'effet de foudre, on remarque alors qu'elle n'est plus protégée contre un effet ultérieur, dans la mesure où le déconnecteur 9 a ouvert la branche de dérivation.

Le principe de base du dispositif parafoudre suivant la présente invention consiste à exploiter une observation faite par le demandeur suivant laquelle, en dynamique, la tension résiduelle d'une diode Zener varie fortement en fonction de la variation du courant di/dt.

En effet, si l'on associe en parallèle, à l'aide de connexions courtes, deux diodes Zener dont la tension de seuil est très voisine, et que l'on reporte sur un diagramme la variation de la tension à leurs bornes en fonction de la variation instantanée de l'intensité di/dt (courbe a) on constate que l'allure des courbes est telle que représenté sur la figure 5. On a fait de même avec une seule des deux diodes Zener, par exemple la diode Z1, et l'on a reporté les valeurs correspondantes sur la même figure 5 (courbe b).

On constate sur cette figures que la courbe caractéristique des deux Zener montées en parallèle se situe sous la courbe correspondante relative à une diode Zener seule.

Par ailleurs on a représenté sur la même figure une troisième courbe, (courbe c) relative à une troisième diode Zener, dont la tension de seuil est légèrement supérieure à la tension de seuil des deux diodes Zener précédentes, préférentiellement d'une valeur ΔV égale à la différence de tension existant entre la valeur Va à faible courant et la valeur Vb à fort courant de cette diode Zener (Figure 3a).

Les courbes obtenues montrent que l'association des deux diodes Zener facilite l'isolation d'un groupe de Zener, et la sélection ou différenciation lors d'une importante surtension de ce groupe particulier.

On sait que la mise en parallèle de jonctions de semi-conducteurs de type Zener pose problème en raison de l'allure de la courbe caractéristique de la fonction Tension/Courant f(U/I), dont un exemple est reproduit sur la figure 3.

En effet, bien que la tension soit la même aux bornes de deux diodes Zener disposées en parallèle, on constate, en raison de la faible pente de la courbe f(U/I), que les courants qui traversent celles-ci peuvent néanmoins être très différents. Ainsi, sur la courbe représentée sur la figure 3, on constate que, pour une même tension V₁, les courants respectifs traversant des diodes Zener D₁ et D₂ dont les tensions de seuil sont voisines, sont traversées par des courants respectifs I₁ et I₂ d'intensités très différentes. Dans ces conditions on comprend qu'il sera nécessaire de les apparier par un tri rigoureux à partir de leur tension de seuil, si l'on souhaite qu'elles répartissent équitablement le courant de décharge.

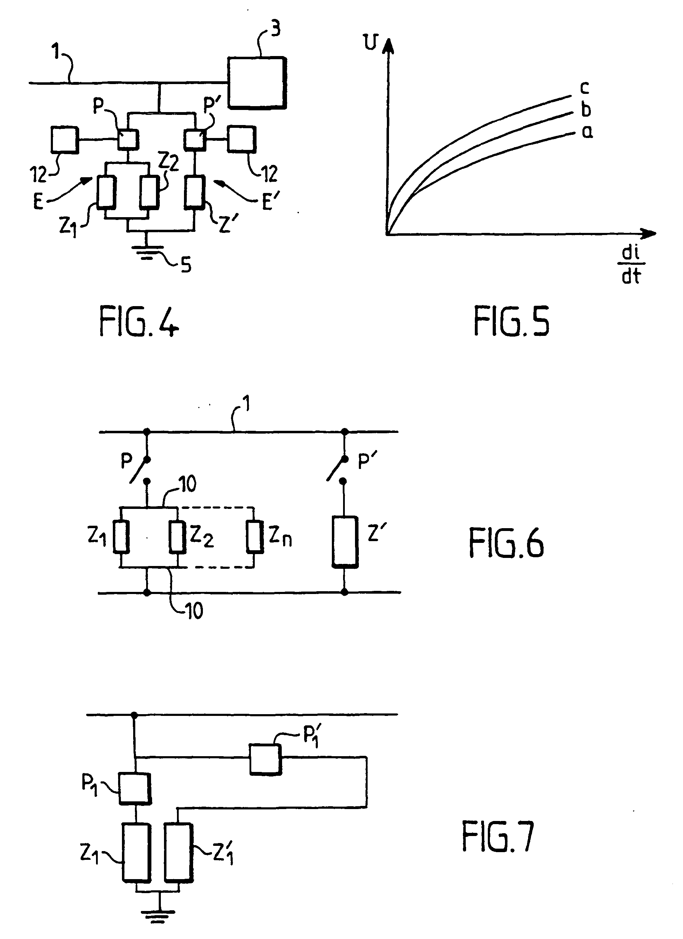

Suivant l'invention, ainsi que représenté sur la figure 4, on a réalisé un module formé de deux ensembles E,E' constitués de diodes Zener, respectivement Z₁ et Z₂ pour l'ensemble E et Z' pour l'ensemble E', que l'on a choisies par triage de façon que leurs tensions de seuil soient voisines, avec lesquelles on a mis en série deux déconnecteurs respectifs P,P', de façon que les deux entrées de ces déconnecteurs P,P', soient réunies par une connexion électrique courte qui est réunie à la ligne 1, de même que leurs sorties respectives sont également réunies, par une connexion électrique courte, elle-même reliée à la terre 5.

Dans ces conditions on comprend que, lorsque survient une surtension importante due à la foudre, le groupe de deux diodes Zener Z₁, Z₂ commence à conduire en premier, si bien qu'en fin de vie (fusion provoquant une conductivité) de l'une des deux, celle-ci court-circuite toutes les autres et qu'elle supporte à elle seule la totalité de l'intensité du courant résultant de cette forte surtension. Pendant le passage de cette forte intensité, le déconnecteur associé à la diode Zener rendue conductrice se déconnecte interrompant alors le passage par celle-ci.

On comprend, dans ces conditions, que le service procuré par la ligne 1 n'a pas été interrompu par la forte surtension traversant le parafoudre et que l'un des deux, à savoir celui qui n'est pas passé à l'état définitif de conduction, reste opérationnel.

Dans un tel montage, il n'est pas possible de savoir que la déconnexion a eu lieu. Pour le savoir on peut bien entendu adjoindre au déconnecteur qui est passé de l'état conducteur à l'état non conducteur des moyens annexes 12 permettant de signaler que le parafoudre qui lui est associé est à remplacer.

On peut ainsi associer à chaque ensemble E,E' une diode «led» qui s'allume lors de la déconnexion du dispositif déconnecteur 9.

Cependant, on a constaté qu'en raison de la nature particulièrement complexe des surtensions dues à la foudre, il peut advenir que deux parafoudres en parallèle conduisent simultanément et que, en conséquence, ils soient donc simultanément détruits, laissant alors l'installation sans protection, les moyens annexe 12 signalant la déconnexion.

Suivant l'invention on proposera donc des moyens permettant de différencier les deux ensembles, de façon, qu'à coup sûr, l'un réagisse avant l'autre.

Un premier moyen consistera donc à différencier les tensions de seuil respectives des ensembles E et E'. Préférentiellement la tension de seuil de l'ensemble E' sera supérieure à la tension de seuil de l'autre ensemble E d'une valeur ΔV égale à la différence de tension existant entre la valeur Vₐ à faible courant et la valeur V_{b} à fort courant de l'autre ensemble (Figure 3a). Ce choix permet de conserver un bon niveau de protection au second étage (à savoir celui dont le seuil est supérieur).

Un second moyen pour assurer la différenciation des diodes Zener consistera à jouer sur les temps de réaction de celles-ci en agissant sur la longueur des liaisons de ces diodes Zener avec l'installation.

Ainsi que représenté sur la figure 7 un premier ensemble constitué d'une diode Zener Z₁ et d'un déconnecteur P₁ est relié à l'installation par une liaison courte, alors qu'un second ensemble constitué d'une diode Zener Z'₁ et d'un déconnecteur P'₁ est relié à l'installation par une liaison longue.

Dans une telle configuration on a constaté que l'ensemble qui était "activé" en premier par une forte surtension due à la foudre était toujours celui à liaison courte. On dispose ainsi d'un moyen supplémentaire pour assurer la différenciation de l'activation des deux ensembles.

On peut bien entendu suivant l'invention, ainsi que représenté sur la figure 6, constituer deux ensembles E et E' dont l'un comprendra un nombre n de diodes Zener, Z₁, Z₂...Zₙ.

Le présent mode de mise en oeuvre de l'invention est intéressant en ce qu'il permet de déterminer celui des deux ensembles de parafoudre qui, à coup sûr, sera activé lors d'une surtension provoquée par la foudre.

Bien que la présente invention soit utilisable et présente de nombreuses applications dans le domaine du courant continu elle est bien entendu également utilisable dans le domaine du courant alternatif. Dans ce dernier cas, il va de soi qu'au lieu d'une simple diode Zener on fera appel à deux diodes Zener montées tête-bêche. Dans le présent texte, une diode Zener désignera donc également deux diodes Zener montées en tête-bêche lorsqu'il s'agira de circuits traitant de courant alternatif.

## Revendications

1. Dispositif parafoudre destiné à protéger une installation (3) alimentée par une ligne électrique (1), formé d'au moins deux ensembles branchés en parallèle entre la ligne à protéger et la terre et comprenant chacun un déconnecteur (P, P' , P₁, P'₁) monté en série avec au moins un composant à résistance variable en fonction de la tension, **caractérisé en ce que** le composant à résistance variable est une diode de type Zener, au moins un ensemble étant constitué d'au moins deux diodes de type Zener, (Z₁,Z'₁,Z₂) disposées en parallèle.

2. Dispositif parafoudre suivant la revendication 1 **caractérisé en ce que** les tensions de seuil des diodes de type Zener (Z₁,Z'₁) respectives desdits ensembles sont voisines.

3. Dispositif parafoudre suivant l'une des revendications 1 ou 2 **caractérisé en ce que** l'un des ensembles comprend une diode de type Zener dont la tension de seuil est supérieure à celle des diodes Zener des autres ensembles.

4. Dispositif parafoudre suivant la revendication 3 **caractérisé en ce que** la tension de seuil dudit ensemble est supérieure à la tension de seuil de l'autre ensemble d'une valeur (ΔV) égale à sensiblement la différence de tension entre les valeurs à faible courant (Vₐ) et à fort courant (V_{b}) de l'autre ensemble.

5. Dispositif parafoudre suivant l'une quelconque des revendications précédentes **caractérisé en ce que** au moins un des ensembles constitués d'au moins deux diodes Zener en parallèle possède des liaisons électriques entre ces diodes et l'installation qui sont des liaisons courtes.

## Claims

1. A lightning arrestor device for protecting an installation (3) powered through an electrical line (1), made up of at least two assemblies connected in parallel between the line to be protected and the ground and each comprising a disconnector (P, P', P₁, P'₁) mounted in series with at least one component with variable voltage-dependent resistance, **characterized in that** the variable resistance component is a Zener type diode, at least one assembly consisting of at least two Zener type diodes, (Z₁, Z'₁, Z₂), arranged in parallel.

2. The lightning arrestor device according to claim 1, **characterized in that** the threshold voltages of the respective Zener type diodes (Z₁, Z'₁) of said assemblies are close to each other.

3. The lightning arrestor device according to any of claims 1 or 2, **characterized in that** one of the assemblies comprises a Zener type diode for which the threshold voltage is larger than that of the Zener diodes of the other assemblies.

4. The lightning arrestor device according to claim 3, **characterized in that** the threshold voltage of said assembly is larger than the threshold voltage of the other assembly by a value (ΔV) equal to substantially the voltage difference between the low current (Vₐ) and strong current (V_{b}) values of the other assembly.

5. The lightning arrestor device according to any of the preceding claims, **characterized in that** at least one of the assemblies consisting of at least two Zener diodes in parallel have electrical connections between these diodes and the installation which are short connections.

## Patentansprüche

1. Blitzschutzvornchtung, die zum Schutz einer durch eine elektrische Leitung (1) versorgte Anlage (3) dient und die aus mindestens zwei Sätzen gebildet ist, die parallel zwischen die zu schützende Leitung und die Erde geschaltet sind und jeweils eine Trenneinrichtung (P, P', P₁, P'₁) aufweisen, die in Reihe mit mindestens einem Bauteil geschaltet ist, dessen Widerstand in Abhängigkeit von der Spannung veränderlich ist, **dadurch gekennzeichnet, dass** das widerstandsveränderliche Bauteil eine Zenerdiode ist, wobei mindestens ein Satz aus mindestens zwei Zenerdioden (Z₁, Z'₁, Z₂) gebildet ist, die parallel angeordnet sind.

2. Blitzschutzvorrichtung nach Anspruch 1, **dadurch gekennzeichnet, dass** die Schwellenspannungen der jeweiligen Zenerdioden (Z₁, Z'₁) der Sätze benachbart sind.

3. Blitzschutzvorrichtung nach einem der Ansprüche 1 oder 2, **dadurch gekennzeichnet, dass** der eine der Sätze eine Zenerdiode aufweist, deren Schwellenspannung höher ist als die der Zenerdioden der anderen Sätze.

4. Blitzschutzvorrichtung nach Anspruch 3, **dadurch gekennzeichnet, dass** die Schwellenspannung des Satzes höher ist als die Schwellenspannung des anderen Satzes, und zwar um einen Wert (ΔV), der im Wesentlichen der Spannungsdifferenz zwischen dem Wert bei schwachem Strom (Vₐ) und dem Wert bei starkem Strom (V_{b}) des anderen Satzes entspricht.

5. Blitzschutzvornchtung nach einem der vorhergehenden Ansprüche, **dadurch gekennzeichnet, dass** mindestens einer der Sätze, die durch mindestens zwei parallelgeschaltete Zenerdioden gebildet sind, elektrische Verbindungen zwischen diesen Dioden und der Anlage aufweist, die kurze Verbindungen sind.
